# EUROPÄISCHE PATENTSCHRIFT

(11) **EP 1 568 932 B1**
(45) Veröffentlichungstag und Bekanntmachung des Hinweises auf die Patenterteilung: **01.09.2010**
(21) Anmeldenummer: 05100859.7
(22) Anmeldetag: 08.02.2005
(51) Int. Cl.: F16L 55/07, F16L 39/00

(54) **Gehäusestruktur**
Housing structure
Structure de logement

(30) Priorität: 27.02.2004 DE 102004010148
(43) Veröffentlichungstag der Anmeldung: 31.08.2005
(73) Patentinhaber: DEERE & COMPANY, Moline, Illinois 61265-8098 (US)
(72) Erfinder: Trinler, Martin, 68766 Hockenheim (DE); Wendel, Sascha, 66996 Schönau (DE)
(74) Vertreter: Holst, Sönke

(56) Entgegenhaltungen:
- EP-A- 0 606 696
- FR-A- 1 480 403
- US-A- 2 856 959
- US-A- 3 485 516
- US-A- 3 794 066

## Beschreibung

Die Erfindung betrifft eine Gehäusestruktur mit mindestens zwei Gehäuseabschnitten. Die Gehäuseabschnitte sind jeweils zum Abdecken und/oder Verschließen einer Hydraulikkupplung vorgesehen, insbesondere zum Staubschutz. Eine erste Hydraulikkupplung ist im Betriebszustand oberhalb einer zweiten Hydraulikkupplung angeordnet, und zwar vorzugsweise an einem Fahrzeug oder an einem Arbeitsgerät, insbesondere an einem landwirtschaftlichen oder industriellen Nutzfahrzeug. Ein Gehäuseabschnitt weist eine mit einem Verschlusselement reversibel verschließbare Öffnung auf, durch welche zum Herstellen einer Hydraulikverbindung ein Gegenstück einer Hydraulikkupplung einführbar ist. Die Gehäusestruktur weist einen im Betriebszustand unten angeordneten Bereich zum Sammeln von Leckageflüssigkeit auf. Für jede zu Kupplungszwecken vorgesehene reversibel verschließbare Öffnung ist ein Rückhaltemittel vorgesehen, mit welchem ein Austreten von Leckageflüssigkeit aus der jeweiligen Öffnung zumindest weitgehend verhinderbar ist.

Landwirtschaftliche und industrielle Nutzfahrzeuge, insbesondere Ackerschlepper, sind gewöhnlich mit hydraulischen Anschlusskupplungen - im Folgenden Hydraulikkupplung genannt - ausgestattet, so dass sich externe Hydraulikmotoren und/oder Hydraulikzylinder anschließen und durch das Hydrauliksystem des Fahrzeugs antreiben lassen. Beim drucklosen Kuppeln entweicht bei gängigen Hydraulikkupplungen gemäß ISO 7241-1 in der Regel ca. 5 ccm Hydraulikflüssigkeit beziehungsweise Hydrauliköl, im Folgenden Leckageflüssigkeit genannt.

Dementsprechend müssen solche oftmals in Form von hydraulischen Schnellkupplungen ausgebildete Hydraulikkupplungen/Anschlüsse vor Feuchtigkeit und Verschmutzung geschützt werden. Hierzu ist beispielsweise bekannt, für jede Hydraulik-Schnellkupplungsmuffe ein Staubschutzgehäuse im Folgenden Gehäusestruktur genannt - vorzusehen, mit welchem das Leckageöl aufgefangen und beispielsweise über einen Schlauch in einem Sammelbehälter gesammelt wird. Ein solches Staubschutzgehäuse ist beispielsweise aus der US 4,481,977 bekannt und umfasst üblicherweise für jede Hydraulikkupplung eine verschließbare Öffnung, durch welche ein Gegenstück zu einer Hydraulikkupplung einführbar ist, um letztendlich eine Hydraulikverbindung zwischen Fahrzeug und einem hydraulischen Verbraucher herzustellen.

Aus der US 3,794,066 ist eine hydraulische Steuervorrichtung mit einer Vielzahl von modular ausgestalteten, vielfach einsetzbaren Funktionsleitungsmodulen bekannt, welche unterschiedlich zusammengestellt werden können, um unterschiedliche hydraulische Kontrollfunktionen zu realisieren. Die so zusammengesetzte hydraulische Steuervorrichtung weist ein Leckageöl-Leitungssystem auf.

Nun werden meist für einen hydraulischen Verbraucher zwei Hydraulikkupplungen vorgesehen, nämlich eine, über welche Hydraulikflüssigkeit vom Fahrzeug an den Verbraucher gefördert wird, und eine zweite Hydraulikkupplung, über welche die Hydraulikflüssigkeit zum Fahrzeug zurückgeführt wird. Diese zwei Hydraulikkupplungen sind üblicherweise am Fahrzeug oder am Arbeitsgerät übereinander angeordnet und von einem gemeinsamen Staubschutzgehäuse zumindest teilweise umschlossen bzw. vor Verschmutzung geschützt. Hierbei wird bislang die von der oberen Hydraulikkupplung austretende Leckageflüssigkeit über eine Verbindungsleitung derart im Staubschutzgehäuse geführt, dass die untere Hydraulikkupplung von der Leckageflüssigkeit benetzt wird und/oder aus der unteren Öffnung des Staubschutzgehäuses austreten kann. Dies führt trotz Verschlusselemente für die Öffnungen und/oder Gummidichtungen an dem Staubschutzgehäuse - insbesondere bei landwirtschaftlichen Anwendungen - zu starken Verschmutzungen der Hydraulikkupplungen und des Staubschutzgehäuses durch anhaftenden Staub. Verschmutzte Hydraulikkupplungen können jedoch im gekuppelten Zustand zu Undichtigkeiten führen, welche schlimmstenfalls zu einem Versagen des Arbeitsgeräts sowie zu einem Verlust einer erheblichen Menge von Hydraulikflüssigkeit führen kann.

Der vorliegenden Erfindung liegt daher die Aufgabe zugrunde, eine Gehäusestruktur der eingangs genannten Art anzugeben und weiterzubilden, durch welche die vorgenannten Probleme überwunden werden. Insbesondere soll ein Benetzen einer Hydraulikkupplung mit Leckageflüssigkeit sowie ein Austreten von Leckageflüssigkeit aus der Öffnung der Gehäusestruktur mit einfachen konstruktiven Mitteln vermieden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Gehäusestruktur der eingangs genannten Art dadurch gekennzeichnet, dass ein Mittel vorgesehen ist, mit welchem die Leckageflüssigkeit, die von der oberen Hydraulikkupplung austritt und sich in dem dieser Hydraulikkupplung zugeordneten Gehäuseabschnitt befindet, zumindest größtenteils zu dem Bereich zum Sammeln von Leckageflüssigkeit leitbar ist. Hierdurch kann in ganz besonders vorteilhafter Weise verhindert werden, dass diese Leckageflüssigkeit einerseits die untere Hydraulikkupplung benetzt und andererseits - sozusagen von oben an der Gehäuseöffnung fließend - aus der Öffnung des unteren Gehäuseabschnitts austritt.

Das Mittel weist einen Kanal auf, mit welchem der obere Gehäuseabschnitt mit dem unteren Gehäuseabschnitt verbindbar ist. Der Kanal mündet an dem unteren Gehäuseabschnitt in einem Bereich zwischen dem Mittel und der Hydraulikkupplung.

In einer bevorzugten Ausführungsform weist das Rückhaltemittel und/oder das Mittel einen an dem Gehäuseabschnitt vorgesehenen, nach innen gerichteten Vorsprung auf. Üblicherweise ist der Innenbereich des Gehäuseabschnitts zylinderförmig ausgebildet. Dementsprechend steht der nach innen gerichtete Vorsprung in radialer Richtung vor bzw. ragt von der Innenwand ab. Das im oberen Gehäuseabschnitt vorgesehene Rückhaltemittel ist ganz besonders bevorzugt über den gesamten Umfang des zylinderförmigen Innenbereichs ausgebildet, so dass hierdurch die sich im oberen Gehäuseabschnitt befindliche Leckageflüssigkeit nicht aus der Öffnung des oberen Gehäuseabschnitts austreten kann.

Ganz besonders bevorzugt ist der Vorsprung auch in dem unteren Gehäuseabschnitt vorgesehen. Der Vorsprung könnte vom Gehäuseabschnitt abragend und der Hydraulikkupplung zugewandt ausgerichtet sein. Hierdurch ist eine der Hydraulikkupplung zugewandte Rille gebildet, mit welcher der Austritt von Leckageflüssigkeit aus einer verschließbaren Öffnung zumindest weitgehend verhindert werden kann.

In einer weiteren Ausführungsform ist das Rückhaltemittel und/oder das Mittel ringförmig ausgebildet. Das Rückhaltemittel und/oder das Mittel könnte an einem Bereich des Gehäuseabschnitts nahe der Hydraulikkupplung angeordnet sein. Hierdurch kann die Leckageflüssigkeit unmittelbar nach ihrem Austritt aus der Hydraulikkupplung zu dem Bereich zum Sammeln geleitet werden, ohne dass Leckageflüssigkeit in den Bereich der Öffnung des Gehäuseabschnitts gelangt und somit beispielsweise das Verschlusselement mit Leckageflüssigkeit benetzt wird.

Ganz allgemein könnte das Rückhaltemittel und/oder das Mittel - wie bereits angedeutet - einen rillenförmigen oder muldenförmigen Kanal aufweisen. Alternativ oder zusätzlich könnte das Rückhaltemittel und/oder das Mittel einen geschlossenen Kanal aufweisen. Insbesondere ist in einer bevorzugten Ausführungsform vorgesehen, dass das Mittel einen Kanal - vorzugsweise in Form eines Rohrabschnitts - aufweist, mit welchem der obere Gehäuseabschnitt mit dem unteren Gehäuseabschnitt verbindbar ist. Dieser Kanal könnte an der Gehäusestruktur mittig angeordnet sein und sich vom unteren Bereich des oberen Gehäuseabschnitts zum oberen Bereich des unteren Gehäuseabschnitts erstrecken.

Ganz besonders bevorzugt mündet der Kanal an dem oberen Gehäuseabschnitt in einem Bereich zwischen dem Rückhaltemittel und der Hydraulikkupplung. Somit kann die im oberen Gehäuseabschnitt befindliche Leckageflüssigkeit nahezu vollständig durch den Kanal abgeführt werden, da die aus der oberen Hydraulikkupplung austretende Leckageflüssigkeit von dem Rückhaltemittel am Austritt aus dem Gehäuseabschnitt gehindert wird und sich somit dort staut beziehungsweise sammelt.

Der Kanal mündet an dem unteren Gehäuseabschnitt in einem Bereich zwischen dem Rückhaltemittel bzw. dem Mittel und der Hydraulikkupplung. Hierdurch kann die von dem oberen Gehäuseabschnitt kommende Leckageflüssigkeit in den Bereich geleitet werden, in welchem die aus der unteren Hydraulikkupplung austretende Leckageflüssigkeit von dem Rückhaltemittel am Austritt aus dem Gehäuseabschnitt gehindert wird.

Zur einfachen und kostengünstigen Produktion ist ganz besonders bevorzugt vorgesehen, die Gehäusestruktur einteilig auszubilden. Bei der Gehäusestruktur könnte es sich beispielsweise um ein einteilig ausgebildetes Kunststoffgehäuse handeln, an welchem Befestigungsmittel zur Befestigung der Gehäusestruktur an den Hydraulikkupplungen vorgesehen sind.

Der Bereich zum Sammeln von Leckageflüssigkeit ist vorzugsweise mit einem Behälter verbindbar, wobei die Verbindung über einen Schlauch hergestellt werden könnte. Der Behälter ist hierbei vorzugsweise getrennt von der Gehäusestruktur ausgebildet und/oder angeordnet. Hierdurch kann die im Behälter gesammelte Leckageflüssigkeit von Zeit zu Zeit fachgerecht entsorgt oder dem Hydrauliksystem wieder zugeführt werden.

Bei mehreren nebeneinander angeordneten oberen und mehreren nebeneinander angeordneten unteren Hydraulikkupplungen ist gemäß einer ganz besonders bevorzugten Ausführungsform jeweils eine Gehäusestruktur für eine obere und eine darunter angeordnete Hydraulikkupplung vorgesehen. Hierdurch kann für jedes Paar von Hydraulikkupplungen eine Gehäusestruktur vorgesehen werden, und an Fahrzeugen mit beispielsweise sechs Hydraulikkupplungen werden drei Gehäusestrukturen, an Fahrzeugen mit acht Hydraulikkupplungen werden dementsprechend vier Gehäusestrukturen angebaut. Vorzugsweise sind die Bereiche zum Sammeln von Leckageflüssigkeit der nebeneinander angeordneten Gehäusestrukturen miteinander verbindbar, beispielsweise jeweils mittels eines T-Stücks.

Gemäß einer besonders bevorzugten Ausführungsform ist ein Dichtungsmittel vorgesehen, welches in mindestens einem Gehäuseabschnitt angeordnet ist. Das Dichtungsmittel könnte derart ausgebildet sein, dass es einerseits zu einer Hydraulikkupplung zumindest bereichsweise einen dichtenden Kontakt herstellt. Andererseits könnte das Dichtungsmittel derart ausgebildet sein, dass es zumindest bereichsweise zu einem Verschlusselement einen dichtenden Kontakt herstellt. Im Konkreten könnte das Dichtungsmittel einteilig und/oder aus elastischem Material ausgebildet sein, beispielsweise aus Gummi. Bei einer einteiligen Ausbildung des Dichtungsmittels kann die Gehäusestruktur derart ausgebildet sein, dass das Dichtungsmittel sich in beiden Gehäuseabschnitten befindet. Weiterhin könnte das Dichtungsmittel das Rückhaltemittel und/oder das Mittel aufweisen.

In einer weniger bevorzugten Ausführungsform ist für mehrere nebeneinander angeordnete obere und mehrere nebeneinander angeordnete untere Hydraulikkupplungen eine einteilige Gehäusestruktur vorgesehen. Dies ermöglicht eine besonders einfache und schnelle Montage der Gehäusestruktur.

Ganz besonders bevorzugt weist eine Hydraulikkupplung eine Hydraulik-Schnellkupplungsmuffe auf. Hierbei kann es sich insbesondere um eine Hydraulik-Schnellkupplungsmuffe handeln, welche lediglich im drucklosen Zustand kuppelbar ist.

Die Gehäusestruktur bzw. ein Gehäuseabschnitt ist zum Schutz gegen Staub und/oder Verschmutzung vorzugsweise derart ausgebildet, dass eine Hydraulikkupplung von einem Gehäuseabschnitt von mindestens einer Seite her zumindest teilweise umschlossen ist. Es handelt sich hierbei üblicherweise um die Seite der Hydraulikkupplung, die für das Kuppeln zugänglich sein muss.

Grundsätzlich könnten die Hydraulikkupplungen mit ihrem Kupplungsende schräg nach unten geneigt angeordnet sein, wodurch sich die Bedienung der Hydraulikkupplungen einfach gestaltet, da diese an einem Ackerschlepper üblicherweise in Schulter- bzw. Kopfhöhe eines Bedieners angeordnet sind. Auch wird durch die Schräglage das Sammeln der Leckageflüssigkeit begünstigt. Vorzugsweise schließt eine Hydraulikkupplungslängsachse mit der Horizontalen einen Winkel zwischen 5 und 25 Grad ein.

Grundsätzlich weist eine reversibel verschließbare Öffnung einen im Wesentlichen kreisförmigen Querschnitt auf. Das eine verschließbare Öffnung verschließende Verschlusselement könnten einen Gummistopfen aufweisen. Solche Gummistopfen sind bereits aus dem Stand Technik bekannt und können in besonders vorteilhafter Weise in großen Stückzahlen kostengünstig hergestellt werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: eine perspektivische Darstellung eines ersten erfindungsgemäßen Ausführungsbeispiels,
- Fig. 2: eine Schnittdarstellung des Ausführungsbeispiels aus Fig. 1,
- Fig. 3: eine perspektivische Darstellung eines zweiten erfindungsgemäßen Ausführungsbeispiels und
- Fig. 4: eine Schnittdarstellung des Ausführungsbeispiels aus Fig. 3.

In den Figuren sind gleiche oder ähnliche Bauteile mit den selben Bezugszeichen gekennzeichnet.

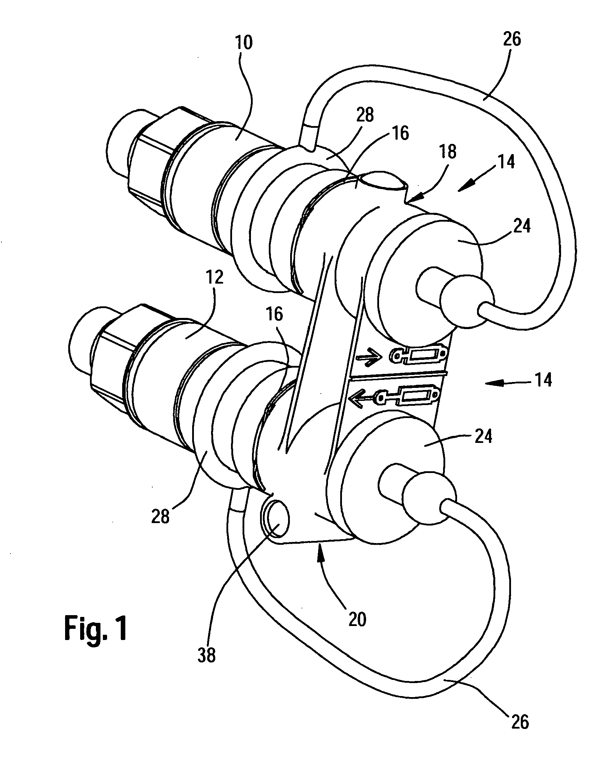

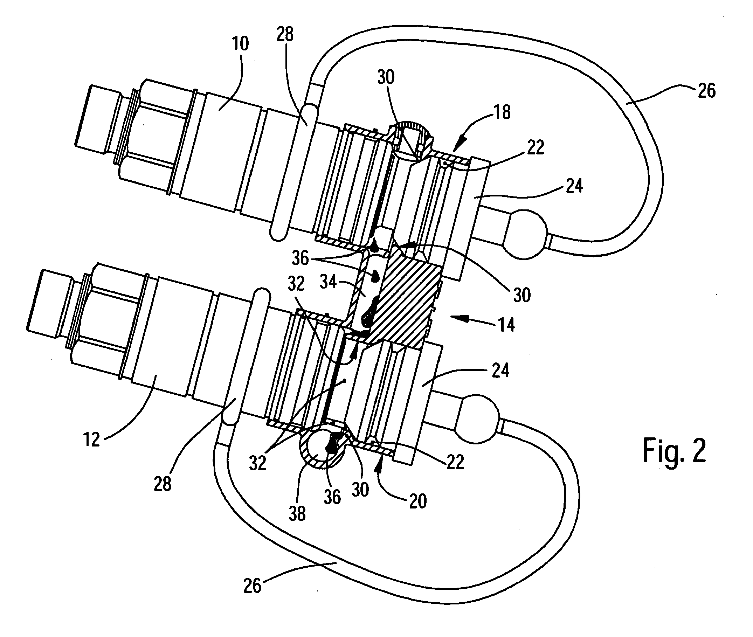

Die Figuren 1 und 2 zeigen zwei in Form von Schnellkupplungsmuffen ausgebildete Hydraulikkupplungen 10, 12, welche an einem in den Figuren nicht gezeigten Ackerschlepper angebaut sind. Die beiden Hydraulikkupplungen 10, 12 sind übereinander angeordnet. An den zwei Hydraulikkupplungen 10, 12 ist die erfindungsgemäße Gehäusestruktur 14 mit Hilfe von zwei in Form von Befestigungsklammern 16 ausgebildeten Befestigungsmitteln befestigt. Die Gehäusestruktur 14 umfasst einen oberen Gehäuseabschnitt 18 und einen unteren Gehäuseabschnitt 20. Jeder Gehäuseabschnitt 18, 20 umschließt bzw. verschließt jeweils die ihm zugeordnete Hydraulikkupplung 10, 12 von der Anschlussseite der Kupplung her.

Sowohl der obere als auch dem unteren Gehäuseabschnitt 18, 20 ist jeweils im Wesentlichen zylinderförmig ausgebildet und weist an der der Kupplungsseite einer Hydraulikkupplung 10, 12 gegenüberliegenden Seite eine Öffnung 22 auf. Die Öffnung 22 ist durch ein Verschlusselement 24 reversibel verschließbar. Die in den Figuren 1 und 2 gezeigten Verschlusselemente 24 sind in Form von Gummistopfen ausgeführt. Sie sind über einen Verbinder 26 mit einem Ringteil 28 - ebenfalls jeweils aus Gummi gefertigt - einteilig ausgebildet, wobei das Ringteil 28 die Hydraulikkupplung 10 bzw. 12 umschließt und hierdurch das Verschlusselement 24 gegen Verlieren gesichert ist.

Figur 2 zeigt die Gehäusestruktur 14 in einer Schnittansicht entlang einer Ebene, welche die Hydraulikkupplungslängsachsen der Hydraulikkupplungen 10, 12 enthält. Figur 2 ist entnehmbar, dass sowohl an dem oberen Gehäuseabschnitt 18 als auch an dem unteren Gehäuseabschnitt 20 Rückhaltemittel 30 vorgesehen sind, mit welchem ein Austreten von Leckageflüssigkeit aus der jeweiligen Öffnung 22 nahezu vollständig verhindert werden kann. Das Rückhaltemittel 30 des oberen Gehäuseabschnitts 18 ist durch einen nach innen gerichteten Vorsprung gebildet. Dieser Vorsprung erstreckt sich ringförmig über den gesamten Umfang des Inneren des im Wesentlichen zylinderförmig ausgebildeten Gehäuseabschnitts 18.

Im unteren Gehäuseabschnitt 20 erstreckt sich das in Form eines Vorsprungs gebildete Rückhaltemittel 30 ebenfalls in das Innere des im Wesentlichen zylindrisch ausgebildeten Gehäuseabschnitts 20, allerdings in umfangsmäßiger Richtung jedoch nur über einen relativ kleinen Bereich an der Unterseite.

Erfindungsgemäß ist ein Mittel 32 vorgesehen, welches ebenfalls von der Innenwand des unteren Gehäuseabschnitts 20 absteht bzw. abragend angeordnet ist, jedoch der Hydraulikkupplung zugewandt ausgerichtet ist. Es hat bezüglich der Öffnungsmittelachse im Wesentlichen ein lineare Form, die aufgrund der schrägen Anordnung der Hydraulikkupplungen 10, 12 bezüglich der Horizontalen eine Auffangfunktion aufweist. Eine muldenförmigen Ausbildung des Mittels 32 wäre ebenfalls denkbar, in diesem Fall wäre es zweckmäßig, die Mulde bezogen zur Innenwand des unteren Gehäuseabschnitts 20 im Querschnitt konvex auszubilden. Das Mittel 32 ist von seinem Maß her größer als beispielsweise das Rückhaltemittel 30 des oberen Gehäuseabschnitts 18 ausgebildet. Auch das Mittel 32 erstreckt sich ringförmig an der Innenwand des unteren Gehäuseabschnitts 20, jedoch nicht über den vollen Umfang, sondern nur bis zu dem relativ kleinen Bereich an der Unterseite des Gehäuseabschnitts 20, an dem das Rückhaltemittel 30 vorgesehen ist.

Zwischen dem oberen und dem unteren Gehäuseabschnitt 18, 20 ist ein Kanal 34 vorgesehen, der in Form eines zylindrischen Rohrabschnitts ausgebildet ist. Der Kanal 34 mündet an dem oberen Gehäuseabschnitt 18 - bezüglich der Längsachse der Hydraulikkupplung 10 - in einem Bereich zwischen dem Rückhaltemittel 30 und dem dem Verschlusselement 24 zugewandten Ende der Hydraulikkupplung 10. Der Kanal 34 mündet an dem unteren Gehäuseabschnitt 20 - bezüglich der Längsachse der Hydraulikkupplung 12 - in einem Bereich zwischen dem Mittel 32 und dem dem Verschlusselement 24 zugewandten Ende der Hydraulikkupplung 12. Dementsprechend verbindet der Kanal 34 den unteren Bereich des Gehäuseabschnitts 18 mit dem oberen Bereich des Gehäuseabschnitts 20.

In Figur 2 ist tropfenförmig austretende Leckageflüssigkeit 36 gezeigt, die von der oberen Hydraulikkupplung 10 austritt und sich im unteren Bereich des oberen Gehäuseabschnitts 18 sammelt. Von hier aus gelangt diese Leckageflüssigkeit 36 über den Kanal 34 in den oberen Bereich des unteren Gehäuseabschnitts 20. Die Leckageflüssigkeit 36 wird von dem Mittel 32 daran gehindert, einerseits das dem Verschlusselement 24 zugewandte Ende der Hydraulikkupplung 12 zu benetzen und andererseits am oberen mittleren Bereich des unteren Gehäuseabschnitts 20 aus der unteren Öffnung 22 abzutropfen. Stattdessen wird aufgrund des Mittels 32 die Leckageflüssigkeit 36 seitlich an der Innenwand der Öffnung 22 in den unteren Bereich des unteren Gehäuseabschnitts 20 geleitet, wo sie in dem Bereich 38 gesammelt wird. Die in dem Bereich 38 der Gehäusestruktur 14 gesammelte Leckageflüssigkeit 36 kann mit einem in den Figuren nicht gezeigten Schlauch zu einem ebenfalls nicht gezeigten, externen Behälter geleitet werden.

Die erfindungsgemäße Gehäusestruktur 14 ist gemäß dem in den Figuren 1 und 2 gezeigten Ausführungsbeispiel in ganz besonders vorteilhafter Weise einteilig ausgebildet und mit den zwei Verschlusselementen 24 verschließbar. Insoweit werden die Hydraulikkupplungen 10, 12 hierdurch wirksam vor Verschmutzung geschützt und ein Austreten von Leckageflüssigkeit 36 wird nahezu vollständig vermieden. Die einteilige Ausbildung der Gehäusestruktur 14 ermöglicht eine einfache und schnelle Montage. Aufgrund der einfachen Bedienung der erfindungsgemäßen Gehäusestruktur 14 ist ein Kuppeln erleichtert, da ein Abwischen der Gehäusestruktur 14 mit einem Lappen nicht erforderlich ist.

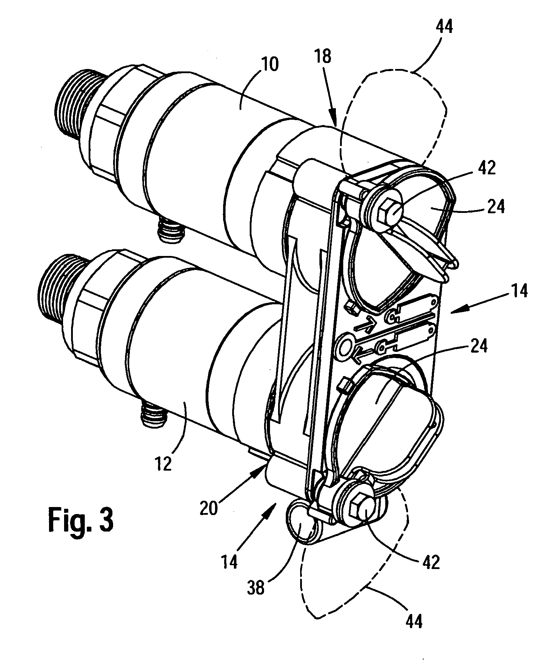

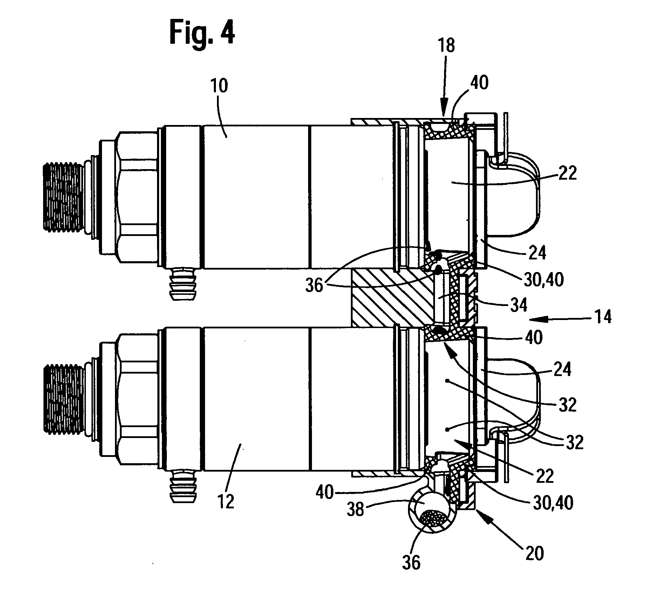

In den Fig. 3 und 4 ist ein weiteres Ausführungsbeispiel einer Gehäusestruktur 14 gezeigt, welche grundsätzlich zu der in den Fig. 1 und 2 gezeigten Gehäusestruktur 14 vergleichbar ausgebildet ist. Gleiche oder ähnliche Bauteile sind daher mit den selben Bezugszeichen gekennzeichnet. Das Ausführungsbeispiel gemäß den Fig. 3 und 4 unterscheidet sich zum dem gemäß den Fig. 1 und 2 insbesondere dadurch, dass ein Dichtungselement 40 vorgesehen ist, welches innerhalb des oberen Gehäuseabschnitts 18 und des unteren Gehäuseabschnitts 20, sozusagen in den beiden Öffnungen 22, angeordnet ist. Bei dem Dichtungselement 40 handelt es sich im Konkreten um ein einteilig und elastisch ausgebildetes Bauteil, es könnte beispielsweise aus Gummi gefertigt sein. Dementsprechend verläuft beispielsweise der die beiden Gehäuseabschnitt 18, 20 verbindenden Kanal 34 zwischen dem Dichtungselement 40 und dem Teil der Gehäusestruktur 14, der zwischen den beiden Hydraulikkupplungen 10, 12 angeordnet ist. Die im unteren Bereich des Gehäuseabschnitts 18 gesammelte Leckageflüssigkeit 36 wird somit zunächst mit den Kanal 34 in den oberen Bereich des unteren Gehäuseabschnitts 20 geleitet. Von dort aus wird die Leckageflüssigkeit 36 mit Hilfe eines geschlossenen Kanals - in Fig. 4 mit dem Bezugszeichen 32 angedeutet - zu dem unteren Bereich 38 des Gehäuseabschnitts 20 geleitet, wobei der geschlossene Kanal ringförmig verläuft und von dem Dichtungsmittel 40 und der inneren Gehäusewand des Gehäuseabschnitts 20 gebildet wird.

Das Dichtungselement 40 ist in diesem Ausführungsbeispiel derart ausgebildet, dass es das Rückhaltemittel 30 umfasst, so dass ein Austreten von Leckageflüssigkeit 36 sowohl aus der oberen als auch aus der unteren Öffnung 22 zumindest weitgehend verhindert werden kann und ein Sammeln der Leckageflüssigkeit 36 auch bei einer gegenüber der Horizontalen verkippten Stellung der Hydraulikkupplungen 10, 12 möglich ist.

Fig. 4 zeigt, dass das Dichtungselement 40 mit der in Fig. 4 dargestellten linken Seite über den gesamten Umfang sowohl mit der Hydraulikkupplung 10 als auch mit den Hydraulikkupplung 12 dichtend zur Anlage kommt. Mit der in Fig. 4 dargestellten rechten Seite des Dichtungselements 40 kommt dieses mit beiden Verschlusselementen 24 dichtend zur Anlage, sofern das jeweilige in Verschlusselement 24 sich in der die jeweiligen Öffnung 22 verschließenden Stellung befindet. Die Verschlusselemente 24 gemäß den Fig. 3 und 4 sind zum Öffnen bzw. Schließen den jeweiligen Öffnung 22 um eine durch eine Befestigungsschraube 42 definierte Achse drehbar angeordnet. Die Bezugszeichen 44 deuten die Positionen der Verschlusselemente 24 in geöffnetem Zustand am.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Gehäusestruktur, mit mindestens zwei Gehäuseabschnitten (18, 20), welche - insbesondere zum Staubschutz - jeweils zum Abdecken und/oder Verschließen einer Hydraulikkupplung (10, 12) vorgesehen sind, wobei eine erste Hydraulikkupplung (10) im Betriebszustand - vorzugsweise an einem Fahrzeug oder an einem Arbeitsgerät - oberhalb einer zweiten Hydraulikkupplung (12) angeordnet ist, wobei ein Gehäuseabschnitt (18, 20) eine mit einem Verschlusselement (24) reversibel verschließbare Öffnung (22) aufweist, durch welche zum Herstellen einer Hydraulikverbindung ein Gegenstück einer Hydraulikkupplung (10, 12) einführbar ist, wobei die Gehäusestruktur (14) einen im Betriebszustand unten angeordneten Bereich (38) zum Sammeln von Leckageflüssigkeit (36) aufweist, und wobei für jede zu Kupplungszwecken vorgesehene reversibel verschließbare Öffnung (22) ein Rückhaltemittel (30) vorgesehen ist, mit welchem ein Austreten von Leckageflüssigkeit (36) aus der jeweiligen Öffnung (22) zumindest weitgehend verhinderbar ist, wobei ein Mittel (32) vorgesehen ist, mit welchem die Leckageflüssigkeit (36), die von der oberen Hydraulikkupplung (10) austritt und sich in dem dieser Hydraulikkupplung (10) zugeordneten Gehäuseabschnitt (18) befindet, zumindest größtenteils zu dem Bereich (38) zum Sammeln von Leckageflüssigkeit (36) leitbar ist, **dadurch gekennzeichnet, dass** das Mittel (32) einen Kanal (34) aufweist, mit welchem der obere Gehäuseabschnitt (13) mit dem unteren Gehäuseabschnitt (20) verbindbar ist und dass der Kanal (34)_an dem unteren Gehäuseabschnitt (20) in einem Bereich zwischen dem Mittel (32) und der Hydraulikkupplung (12) mündet.

2. Gehäusestruktur nach Anspruch 1, **dadurch gekennzeichnet, dass** das Rückhaltemittel (30) und/oder das Mittel (32) einen an dem Gehäuseabschnitt vorgesehenen, nach innen gerichteten Vorsprung aufweist, dass vorzugsweise der Vorsprung in dem unteren Gehäuseabschnitt (20) vorgesehen ist, und dass der Vorsprung insbesondere vom Gehäuseabschnitt (20) abragend und der Hydraulikkupplung (12) zugewandt ausgerichtet ist.

3. Gehäusestruktur nach Anspruch 1 oder 2, **dadurch gekennzeichnet, dass** das Rückhaltemittel (30) und/oder das Mittel (32) ringförmig ausgebildet und insbesondere an einem Bereich des Gehäuseabschnitts (18, 20) nahe der Hydraulikkupplung (10, 12) angeordnet ist.

4. Gehäusestruktur nach einem der Ansprüche 1 bis 3, **dadurch gekennzeichnet, dass** das Rückhaltemittel (30) und/oder das Mittel (32) einen rillen-, muldenförmigen und/oder einen geschlossenen Kanal (34) aufweist.

5. Gehäusestruktur nach einem der Ansprüche 1 bis 4, **dadurch gekennzeichnet, dass** das Mittel (32) einen Kanal (34) in Form eines Rohrabschnitts aufweist, und dass der Kanal (34) an dem oberen Gehäuseabschnitt (18) in einem Bereich zwischen dem Rückhaltemittel (30) und der Hydraulikkupplung (10) münden kann.

6. Gehäusestruktur nach einem der Ansprüche 1 bis 5*,* **dadurch gekennzeichnet, dass** die Gehäusestruktur (14) einteilig ausgebildet ist.

7. Gehäusestruktur nach einem der Ansprüche 1 bis 6, **dadurch gekennzeichnet, dass** der Bereich (38) zum Sammeln von Leckageflüssigkeit (36) mit einem Behälter - insbesondere über einen Schlauch - verbindbar ist, wobei der Behälter vorzugsweise getrennt von der Gehäusestruktur (14) ausgebildet und/oder angeordnet ist.

8. Gehäusestruktur nach einem der Ansprüche 1 bis 7, **dadurch gekennzeichnet, dass** bei mehreren nebeneinander angeordneten oberen und mehreren nebeneinander angeordneten unteren Hydraulikkupplungen jeweils eine Gehäusestruktur (14) für eine obere und eine darunter angeordnete Hydraulikkupplung vorgesehen ist, und dass vorzugsweise die Bereiche (38) zum Sammeln von Leckageflüssigkeit (36) der nebeneinander angeordneten Gehäusestrukturen miteinander verbindbar sind.

9. Gehäusestruktur nach einem der Ansprüche 1 bis 8, **dadurch gekennzeichnet, dass** für mehrere nebeneinander angeordnete obere und mehrere nebeneinander angeordnete untere Hydraulikkupplungen eine einteilige Gehäusestruktur vorgesehen ist.

10. Gehäusestruktur nach einem der Ansprüche 1 bis 9, **dadurch gekennzeichnet, dass** ein Dichtungsmittel (40) vorgesehen ist, welches in mindestens einem Gehäuseabschnitt (18, 20) angeordnet ist und dass vorzugsweise zwischen dem Dichtungsmittel (40) und mindestens einer Hydraulikkupplung (10, 12) und/oder zwischen dem Dichtungsmittel (40) und mindestens einem Verschlusselement (24) zumindest bereichsweise ein dichtender Kontakt herstellbar ist.

11. Gehäusestruktur nach Anspruch 10, **dadurch gekennzeichnet, dass** das Dichtungsmittel (40) einteilig und/oder aus elastischem Material ausgebildet ist.

12. Gehäusestruktur nach Anspruch 10 oder 11, **dadurch gekennzeichnet, dass** das Dichtungsmittel (40) das Rückhaltemittel (30) und/oder das Mittel (32) aufweist.

13. Gehäusestruktur nach einem der Ansprüche 1 bis 12, **dadurch gekennzeichnet, dass** eine Hydraulikkupplung (10, 12) eine Hydraulik-Schnellkupplungsmuffe aufweist und/oder dass eine Hydraulikkupplung (10, 12) von einem Gehäuseabschnitt (18, 20) von mindestens einer Seite her zumindest teilweise umschlossen ist.

14. Gehäusestruktur nach einem der Ansprüche 1 bis 10, **dadurch gekennzeichnet, dass** die Hydraulikkupplungen (10, 12) mit ihrem Kupplungsende schräg nach unten geneigt angeordnet sind, wobei vorzugsweise eine Hydraulikkupplungslängsachse mit der Horizontalen einen Winkel zwischen 5 und 25 Grad einschließt.

15. Gehäusestruktur nach einem der Ansprüche 1 bis 11, **dadurch gekennzeichnet, dass** das Verschlusselement (24) ein Gummistopfen oder eine schwenkbar angeordnete Verschlussklappe aufweist.

## Claims

1. Housing structure having at least two housing portions (18, 20), which - in particular for dust protection - are respectively designed to cover and/or close off a hydraulic coupling (10, 12), wherein a first hydraulic coupling (10) in the operating state - preferably on a vehicle or on an implement - is disposed above a second hydraulic coupling (12), wherein a housing portion (18, 20) has an opening (22) which is reversibly closable with a closure element (24) and through which, for the creation of a hydraulic connection, a counterpart of a hydraulic coupling (10, 12) can be introduced, wherein the housing structure (14) has a, in the operating state, lowly situated region (38) for the collection of leak fluid (36), and wherein, for each reversibly closable opening (22) designed for coupling purposes, a retaining means (30) is provided, with which an escape of leak fluid (36) from the respective opening (22) is at least largely preventable, wherein a means (32) is provided, with which the leak fluid (36) which escapes from the upper hydraulic coupling (10) and is present in the housing portion (18) assigned to this hydraulic coupling (10) can be led at least for the most part to the region (38) for the collection of leak fluid (36), **characterized in that** the means (32) has a channel (34) with which the upper housing portion (18) is connectable to the lower housing portion (20), and **in that** the channel (34) on the lower housing portion (20) emerges in a region between the means (32) and the hydraulic coupling (12).

2. Housing structure according to Claim 1, **characterized in that** the retaining means (30) and/or the means (32) has an inwardly directed projection provided on the housing portion, **in that** the projection is preferably provided in the lower housing portion (20), and **in that** the projection, in particular, is aligned such that it protrudes from the housing portion (20) and faces towards the hydraulic coupling (12).

3. Housing structure according to Claim 1 or 2, **characterized in that** the retaining means (30) and/or the means (32) is annularly configured and is disposed, in particular, on a region of the housing portion (18, 20) close to the hydraulic coupling (10, 12).

4. Housing structure according to one of Claims 1 to 3, **characterized in that** the retaining means (30) and/or the means (32) has a groove-shaped, trough-shaped and/or a closed channel (34).

5. Housing structure according to one of Claims 1 to 4, **characterized in that** the means (32) has a channel (34) in the form of a tubular portion, and **in that** the channel (34) on the upper housing portion (18) can emerge in a region between the retaining means (30) and the hydraulic coupling (10).

6. Housing structure according to one of Claims 1 to 5, **characterized in that** the housing structure (14) is configured in one piece.

7. Housing structure according to one of Claims 1 to 6, **characterized in that** the region (38) for the collection of leak fluid (36) can be connected - in particular by a hose - to a container, the container preferably being configured and/or arranged separate from the housing structure (14).

8. Housing structure according to one of Claims 1 to 7, **characterized in that**, in the event of a plurality of mutually adjacent upper and a plurality of mutually adjacent lower hydraulic couplings, a housing structure (14) for an upper and a below-situated hydraulic coupling is respectively provided, and **in that** the regions (38) for the collection of leak fluid (36) of the mutually adjacent housing structures are preferably interconnectable.

9. Housing structure according to one of Claims 1 to 8, **characterized in that**, for a plurality of mutually adjacent upper and a plurality of mutually adjacent lower hydraulic couplings, a one-part housing structure is provided.

10. Housing structure according to one of Claims 1 to 9, **characterized in that** a sealing means (40) is provided, which is disposed in at least one housing portion (18, 20), and **in that**, between the sealing means (40) and at least one hydraulic coupling (10, 12) and/or between the sealing means (40) and at least one closure element (24), a sealing contact can preferably be created at least in certain areas.

11. Housing structure according to Claim 10, **characterized in that** the sealing means (40) is configured in one part and/or made of elastic material.

12. Housing structure according to Claim 10 or 11, **characterized in that** the sealing means (40) has the retaining means (30) and/or the means (32).

13. Housing structure according to one of Claims 1 to 12, **characterized in that** a hydraulic coupling (10, 12) has a hydraulic quick-coupling sleeve, and/or **in that** a hydraulic coupling (10, 12) is at least partially enclosed, from at least one side, by a housing portion (18, 20).

14. Housing structure according to one of Claims 1 to 10, **characterized in that** the hydraulic couplings (10, 12) are arranged with their coupling end angled obliquely downwards, a hydraulic coupling longitudinal axis preferably forming an angle of between 5 and 25 degrees with the horizontal.

15. Housing structure according to one of Claims 1 to 11, **characterized in that** the closure element (24) has a rubber stopper and a pivotably arranged shutter.

## Revendications

1. Structure de logement, avec au moins deux parties de logement (18, 20), qui - en particulier pour la protection contre les poussières - sont chacune prévues pour couvrir et/ou enfermer un embrayage hydraulique (10, 12), dans laquelle un premier embrayage hydraulique (10) est, dans l'état de fonctionnement - de préférence sur un véhicule ou sur un appareil de travail - disposé au-dessus d'un deuxième embrayage hydraulique (12), dans laquelle une partie de logement (18, 20) présente une ouverture (22) pouvant être fermée de façon réversible au moyen d'un élément de fermeture (24), à travers laquelle une pièce opposée d'un embrayage hydraulique (10, 12) peut être introduite pour réaliser une liaison hydraulique, dans laquelle la structure de logement (14) présente une région (38) disposée dans le bas dans l'état de fonctionnement pour collecter le liquide de fuite (36), et dans laquelle il est prévu, pour chaque ouverture (22) pouvant être fermée de façon réversible prévue pour des motifs d'embrayage, un moyen de retenue (30) avec lequel une sortie de liquide de fuite (36) hors de l'ouverture respective (22) peut être au moins largement empêchée, dans laquelle il est prévu un moyen (32) avec lequel le liquide de fuite (36), qui sort de l'embrayage hydraulique supérieur (10) et s'accumule dans la partie de logement (18) associée à cet embrayage hydraulique (10), peut être conduit au moins pour la plus grande partie vers la région (38) pour la collecte de liquide de fuite (36), **caractérisée en ce que** le moyen (32) présente un canal (34), avec lequel la partie de logement supérieure (18) peut être reliée à la partie de logement inférieure (20) et **en ce que** le canal (34) débouche sur la partie de logement inférieure (20) dans une région située entre le moyen (32) et l'embrayage hydraulique (12).

2. Structure de logement selon la revendication 1, **caractérisée en ce que** le moyen de retenue (30) et/ou le moyen (32) présentent une saillie orientée vers l'intérieur, prévue sur la partie de logement, **en ce que** la saillie est de préférence prévue dans la partie de logement inférieure (20) et **en ce que** la saillie est orientée en particulier en s'écartant de la partie de logement (20) et en étant tournée vers l'embrayage hydraulique (12).

3. Structure de logement selon la revendication 1 ou 2, **caractérisée en ce que** le moyen de retenue (30) et/ou le moyen (32) sont de forme annulaire et sont disposés en particulier dans une région de la partie de logement (18, 20) proche de l'embrayage hydraulique (10, 12).

4. Structure de logement selon l'une quelconque des revendications 1 à 3, **caractérisée en ce que** le moyen de retenue (30) et/ou le moyen (32) présentent un canal en forme de sillon, en forme d'auge et/ou fermé (34).

5. Structure de logement selon l'une quelconque des revendications 1 à 4, **caractérisée en ce que** le moyen (32) présente un canal (34) sous la forme d'une partie de tube, et **en ce que** le canal (34) peut déboucher sur la partie de logement supérieure (18) dans une région située entre le moyen de retenue (30) et l'embrayage hydraulique (10).

6. Structure de logement selon l'une quelconque des revendications 1 à 5, **caractérisée en ce que** la structure de logement (14) est réalisée en une seule pièce.

7. Structure de logement selon l'une quelconque des revendications 1 à 6, **caractérisée en ce que** la région (38) pour collecter le liquide de fuite (36) peut être raccordée à un réservoir - en particulier à l'aide d'un tuyau souple -, dans laquelle le réservoir est réalisé et/ou disposé de préférence séparément de la structure de logement (14).

8. Structure de logement selon l'une quelconque des revendications 1 à 7, **caractérisée en ce que**, dans le cas de plusieurs embrayages hydrauliques supérieurs disposés les uns à côté des autres et de plusieurs embrayages hydrauliques inférieurs disposés les uns à côté des autres, il est chaque fois prévu une structure de logement (14) pour un embrayage hydraulique supérieur et un embrayage hydraulique inférieur agencé en dessous de celui-ci, et **en ce que** les régions (38) pour collecter le liquide de fuite (36) des structures de logement disposées les unes à côté des autres peuvent de préférence être reliées entre elles.

9. Structure de logement selon l'une quelconque des revendications 1 à 8, **caractérisée en ce qu'**il est prévu une structure de logement en une seule pièce pour plusieurs embrayages hydrauliques supérieurs disposés les uns à côté des autres et plusieurs embrayages hydrauliques inférieurs disposés les uns à côté des autres.

10. Structure de logement selon l'une quelconque des revendications 1 à 9, **caractérisée en ce qu'**il est prévu un moyen d'étanchéité (40), qui est disposé dans au moins une partie de logement (18, 20) et **en ce qu'**un contact étanche est réalisable au moins localement de préférence entre le moyen d'étanchéité (40) et au moins un embrayage hydraulique (10, 12) et/ou entre le moyen d'étanchéité (40) et au moins un élément de fermeture (24).

11. Structure de logement selon la revendication 10, **caractérisée en ce que** le moyen d'étanchéité (40) est réalisé d'une seule pièce et/ou en matériau élastique.

12. Structure de logement selon la revendication 10 ou 11, **caractérisée en ce que** le moyen d'étanchéité (40) comprend le moyen de retenue (30) et/ou le moyen (32).

13. Structure de logement selon l'une quelconque des revendications 1 à 12, **caractérisée en ce qu'**un embrayage hydraulique (10, 12) présente un manchon d'embrayage hydraulique rapide et/ou **en ce qu'**un embrayage hydraulique (10, 12) est entouré au moins partiellement par une partie de logement (18, 20).

14. Structure de logement selon l'une quelconque des revendications 1 à 10, **caractérisée en ce que** les embrayages hydrauliques (10, 12) sont disposés avec leur extrémité d'embrayage inclinée en oblique vers le bas, dans laquelle un axe longitudinal d'embrayage hydraulique forme de préférence un angle compris entre 5 et 25 degrés par rapport l'horizontale.

15. Structure de logement selon l'une quelconque des revendications 1 à 11, **caractérisée en ce que** l'élément de fermeture (24) présente un bouchon de caoutchouc ou un clapet de fermeture monté de façon pivotante.
